# DEMANDE DE BREVET EUROPEEN

(11) **EP 3 292 783 A1**
(43) Date de publication de la demande: **14.03.2018**
(21) Numéro de dépôt: 16188373.1
(22) Date de dépôt: 12.09.2016
(51) Int. Cl.: A44C 5/20

(54) **FERMOIR DE BRACELET**

(71) Demandeur: de Retz, Renaud, 2017 Boudry (CH)
(72) Inventeur: de Retz, Renaud, 2017 Boudry (CH)
(74) Mandataire: e-Patent SA

(57) **Abrégé**

Fermoir (1) pour bracelet (11) comprenant :
- un élément de liaison (3) définissant un axe longitudinal (5), cet élément de liaison (3) comprenant un premier logement (7a) et un second logement (7b) pour recevoir chacun une extrémité dudit bracelet (11), chacun desdits logements comprenant une ouverture latérale (13a, 13b) communiquant avec une ouverture longitudinale (15a, 15b), ladite ouverture latérale (13a, 13b) étant agencée pour permettre l'insertion d'un élément de blocage (9a, 9b) solidaire d'une extrémité du bracelet (11), ladite ouverture longitudinale (15a, 15b) étant conformée pour permettre le passage dudit bracelet (11) et pour bloquer axialement ledit élément de blocage (9a, 9b) ;
- un premier et un second capuchon (19a, 19b) destinés à être enfilés sur ledit bracelet (11).

Selon l'invention, chaque capuchon (19a, 19b) est adapté pour être enfoncé selon une direction axiale autour d'au moins une partie dudit élément de liaison (3) afin de fermer au moins partiellement l'ouverture latérale correspondante et de retenir l'élément de blocage correspondant (9a, 9b) dans son logement (7a, 7b).

## Description

### Domaine technique

La présente invention se rapporte au domaine de la bijouterie. Elle concerne, plus particulièrement, un fermoir de bracelet.

### Etat de la technique

Le document DE4016334 dévoile un fermoir de bracelet pour bracelet à fil de section circulaire. A une extrémité du bracelet se trouve une bille, tandis qu'un élément de liaison est solidaire de l'autre extrémité. L'élément de liaison comporte un logement conformé pour recevoir la bille avec jeu lorsqu'elle y est insérée latéralement, et pour la verrouiller longitudinalement. Afin d'éviter que la bille ne sorte intempestivement de son logement, un manchon de sécurité est prévu. Ce manchon est enfilé sur le bracelet, et se visse sur l'élément de liaison de telle sorte qu'il s'étend en superposition du logement, afin d'y bloquer la bille. En position de verrouillage, le manchon recouvre entièrement l'élément de liaison. Cependant, si le taraudage et le filetage se bloquent en position de verrouillage de la bille, la construction n'offre pas de prise pour exercer un couple suffisant pour le dévissage, car le bracelet est flexible et la bille peut tourner avec du jeu dans le logement. Cet inconvénient est amplifié dans le cas où le bracelet est élastique et donc très souple.

D'autre part, si le manchon n'est pas bloqué en position de verrouillage, il existe un risque que des déplacements du fermoir sur le poignet du porteur le dévissent, que la bille sorte du logement, et que le bracelet s'enlève intempestivement du poignet du porteur.

Par ailleurs, puisque l'élément de liaison est solidaire d'une extrémité du bracelet, il n'est pas possible de remplacer ou de changer le bracelet sans changer de fermoir dans le même temps, ce qui revient à acquérir plusieurs bracelets complets.

Le but de l'invention est de proposer un fermoir de bracelet dans lequel les inconvénients susmentionnés sont au moins partiellement surmontés.

### Divulguation de l'invention

De façon plus précise, l'invention concerne un fermoir pour bracelet comprenant un élément de liaison qui sert pour lier les extrémités d'un bracelet, qui peut être extensible et élastique, ou substantiellement non extensible. Cet élément de liaison définit un axe longitudinal et comprend un premier logement et un second logement pour recevoir chacun une extrémité dudit bracelet, chacun desdits logements comprenant une ouverture latérale communiquant avec une ouverture longitudinale. L'ouverture latérale est agencée pour permettre l'insertion d'un élément de blocage solidaire d'une extrémité du bracelet, et ladite ouverture longitudinale est adaptée pour permettre le passage dudit bracelet et pour bloquer axialement ledit élément de blocage.

Le fermoir comprend en outre un premier et un second capuchon destinés à être enfilés sur ledit bracelet. Selon l'invention, chaque capuchon est adapté pour être enfoncé selon une direction axiale autour d'au moins une partie dudit élément de liaison afin de fermer au moins partiellement l'ouverture latérale correspondante et de retenir l'élément de blocage correspondant dans son logement.

Les capuchons se mettent en place sur l'élément de liaison et s'enlèvent linéairement, sans nécessiter que l'utilisateur les tourne autour de l'axe longitudinal. Les capuchons peuvent être enlevés chacun en tirant sur le capuchon concerné et sur l'extrémité de bracelet se situant sur l'autre côté du fermoir, ce qui est facile pour l'utilisateur même si le bracelet est élastique et très flexible. Par ailleurs, il n'y a plus de risque que le capuchon s'enlève par frottements avec la peau de l'utilisateur lors des déplacements dudit fermoir.

Avantageusement, les capuchons présentent chacun une forme creuse comportant une première face ouverte agencée pour recevoir ledit élément de liaison et une seconde face partiellement fermée comportant une ouverture pour le passage du bracelet. Les extrémités de l'élément de liaison peuvent ainsi être cachées par les capuchons, et ces derniers peuvent être guidés sur le bracelet par les ouvertures de chaque capuchon.

Avantageusement, l'ouverture pour le passage du bracelet est conformée de telle sorte que l'élément de blocage peut passer au travers de ladite ouverture, ce qui permet d'échanger le bracelet sans échanger les capuchons.

Avantageusement, le fermoir comporte en outre un système de rétention agencé pour retenir chaque capuchon sur ledit élément de liaison, afin d'éviter que les capuchons s'enlèvent de l'élément de liaison de manière intempestive. Ce système de rétention peur comprendre au moins une bague élastique située dans une rainure ménagée dans ledit élément de liaison ou dans une paroi intérieure de chaque capuchon. Les frottements engendrés par la bague élastique lorsque les capuchons sont enfoncés sur l'élément de liaison retiennent ainsi le capuchon en place. Un système de rétention simple comportant un nombre minimum d'éléments est ainsi proposé. Par exemple, une seule bague élastique de forme et dimensions adaptées pour interagir avec les deux capuchons en même temps peut être utilisée.

Avantageusement, ledit système de rétention comprend au moins une bague élastique, de préférence deux bagues élastiques, associées à chaque capuchon. Des joints toriques standards peuvent ainsi être utilisés.

Ledit fermoir peut être intégré dans un ensemble comprenant en outre un bracelet muni d'un desdits éléments de blocage à chacune de ses extrémités.

Ces éléments de blocage peuvent être formés en tant que bille, cylindre, polyèdre ou cône, et peuvent être sertis, rivés, collés, soudés ou goupillés sur ledit bracelet.

Avantageusement, au moins l'un desdits éléments de blocage est de plus grand diamètre que le diamètre maximum dudit bracelet. Par ailleurs, le bracelet peut être extensible et élastique, ce qui permet de mettre aisément le bracelet au poignet du porteur ou de l'enlever.

### Brève description des dessins

D'autres détails de l'invention apparaîtront plus clairement à la lecture de la description qui suit, faite en référence aux dessins annexés dans lesquels :
- Figure 1 est une vue en transparence partielle simplifiée schématique en plan d'un bracelet comportant un fermoir selon l'invention, en état ouvert ;
- Figure 2 est une vue en transparence partielle simplifiée schématique latérale d'un bracelet comportant un fermoir selon l'invention, en état partiellement fermé ;
- Figure 3 est une vue en transparence partielle simplifiée axiale de l'élément de liaison du fermoir selon l'invention ; et
- Figure 4 est une vue simplifiée schématique en plan d'un bracelet comportant un fermoir selon l'invention, en état fermé.

### Modes de réalisation de l'invention

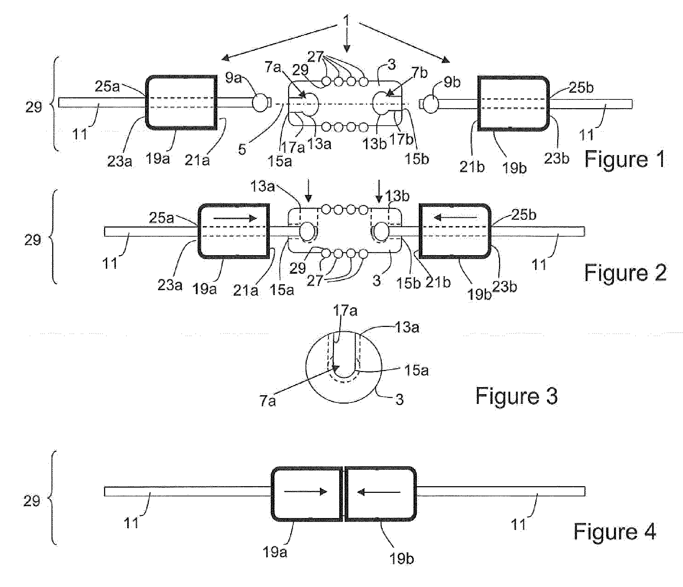

Les figures 1 et 2 illustrent un fermoir 1 selon l'invention, associé à un bracelet 11, afin de former un ensemble bracelet-fermoir 29.

Ce fermoir 1 comporte un élément de liaison 3, qui sert de corps de fermoir. Cet élément de liaison 3 s'étend le long d'un axe 5, qui définit une direction longitudinale du fermoir 1, et présente une forme substantiellement cylindrique. Les arêtes externes de l'élément de liaison peuvent être arrondies, biseautées, chanfreinées, ou similaire. Alternativement, l'élément de liaison peut présenter une forme de prisme, d'ovoïde, de ballon de Football Américain ou similaire.

Un premier logement 7a et un second logement 7b se trouvent sur cet axe 5, qui servent pour recevoir et pour bloquer des éléments de blocage 9a, 9b solidaires d'extrémités respectives d'un bracelet 11 comportant un brin. Ce dernier peut être en forme de fil, de corde, de boudin du genre « scoubidou », ou toute autre forme adaptée, par exemple plat, tressé ou similaire, et muni d'une extrémité de forme adaptée pour accepter les éléments de blocage 9a, 9b susmentionnés, comme cela apparaîtra plus clairement par la suite. Le bracelet 11 peut être extensible et élastique, ou substantiellement non extensible (c'est-à-dire rigide longitudinalement). Par ailleurs, par « bracelet », on doit comprendre toute pièce de bijouterie qui convient à être portée autour du poignet ou de la cheville du porteur, le bracelet faisant un ou plusieurs tours autour du membre concerné si la pièce de bijouterie convient également à être portée en tant que collier ou autrement.

Ces éléments de blocage 9a, 9b peuvent être de n'importe quelle forme adaptée, par exemple en forme de bille sphérique ou ovoïde, de cône, de polyèdre, de cylindre ou similaire, et sont solidaires chacun d'une extrémité du bracelet 11. Dans le cas illustré, les éléments de blocage 9a, 9b sont des billes collées sur les extrémités du bracelet 9 au moyen d'un procédé de collage au plasma. Dans ce but, chaque bille peut comporter un trou conformé pour pouvoir être enfilé sur l'extrémité correspondant du bracelet 11. Une fois que la bille aura été enfilée, elle peut être collée, ou alternativement sertie dans une presse de telle sorte que le diamètre du trou est réduit, la bille étant ainsi serrée sur l'extrémité du bracelet 11. Ce principe s'applique dans la même mesure à d'autres formes envisageables des éléments de blocage 9a, 9b.

Encore alternativement, la fixation de la bille 9a, 9b sur l'extrémité du bracelet 11 peut s'effectuer au moyen d'un goupillage, dans lequel la bille (ou similaire) est munie d'au moins une ouverture latérale au travers de laquelle une goupille est insérée et pénètre au travers de l'extrémité du bracelet 11, puis est sertie, soudée ou collée dans la bille.

Chaque logement 7a, 7b est conformé de telle sorte qu'il puisse recevoir latéralement un élément de blocage 9a, 9b respectif, et pour bloquer longitudinalement ce dernier.

À cet effet, chaque logement 7a, 7b comporte une ouverture latérale 13a, 13b qui s'ouvre sur la paroi latérale de l'élément de liaison. Cette ouverture latérale 13a est conformée de telle sorte que l'élément de blocage 9a puisse y entrer selon une direction radiale.

Par ailleurs, une ouverture longitudinale 15a, 15b débouche d'une part dans la face frontale de l'élément de liaison 3, et d'autre part dans l'ouverture latérale 13a, 13b. L'ouverture longitudinale 15a, 15b est conformée de telle sorte que le bracelet 11 puisse passer, mais que l'élément de blocage 9a, 9b soit bloqué.

Afin de permettre l'insertion de l'extrémité du bracelet 1 et de l'élément de blocage 9, 9b selon une direction radiale (comme indiquée par les flèches verticales sur la figure 2), l'ouverture latérale 13a, 13b et l'ouverture longitudinale 15a, 15b sont reliées par une fente 17a, 17b, s'étendant de l'ouverture longitudinale 15a, 15b à la paroi extérieure de l'élément de liaison selon une direction parallèle à l'ouverture latérale 13a, 13b. Chaque ouverture longitudinale 15a, 15b communique donc avec l'ouverture latérale 13a, 13b correspondante. Dans la variante illustrée, cette fente 17a, 17b présente la même largeur que l'ouverture longitudinale 15a, 15b, et peut être formée dans la même étape de procédure que cette dernière, par exemple au moyen d'un usinage classique. Cependant, il est possible que la largeur de la fente puisse varier, par exemple en s'élargissant vers la paroi extérieure de l'élément de liaison 3.

Afin de bloquer les éléments de blocage 9a, 9b dans leurs logements 7a, 7b respectifs, deux capuchons 19a, 19b sont enfilés sur le bracelet 11. Chaque capuchon présente une forme creuse, sensiblement complémentaire à celle de l'élément de liaison 3. Cette forme creuse a une première extrémité ouverte 21a, 21b dirigée en direction de l'élément de blocage respectif, et une seconde extrémité partiellement fermée 23a, 23b, percée d'un trou 25a, 25b pour le passage du bracelet 11 et éventuellement aussi de l'élément de blocage 9a, 9b. Le diamètre interne de chaque capuchon 19a, 19b est choisi de telle sorte que ces derniers puissent être enfoncés autour de l'élément de liaison 3 selon une direction axiale. Ce faisant, les parois cylindriques des capuchons 19a, 19b ferment chacune les ouvertures latérales respectives 13a, 13b, comme l'illustre la figure 3. Puisque les capuchons 19a, 19b sont enfoncés autour de l'élément de liaison 3 selon une direction axiale, aucune rotation des capuchons 19a, 19b n'est nécessaire, et aucun filetage ne doit être prévu.

Divers systèmes de rétention des capuchons 19a, 19b sur l'élément de liaison 3 peuvent être envisagés, dont une variante particulièrement simple est illustrée dans les figures.

Dans cette variante, le système de rétention comporte une pluralité de bagues élastiques 27 en élastomère, en polymère, ou en caoutchouc, logées dans des rainures 29 annulaires correspondantes s'étendant autour de l'élément de liaison 3, deux de ces bagues étant associées à chaque capuchon 23a, 23b, retenant ces derniers par frottements. Une seule bague par capuchon est également envisageable, et on pourrait même envisager une seule bague élastique substantiellement cylindrique agencée symétriquement sur, et s'étendant le long de, l'élément de liaison et servant pour retenir les deux capuchons 19a, 19b.

Alternativement, les bagues élastiques 27 peuvent être logées dans des rainures prévues dans la paroi cylindrique intérieure des capuchons 19a, 19b.

En tant qu'autres systèmes de rétention envisageables, on peut citer par exemple des crans, des systèmes à détente, etc.

Afin d'enlever le bracelet 11 du poignet de l'utilisateur s'il n'est pas élastique, ou pour ouvrir le fermoir 1 plus généralement, il suffit de retirer l'un des capuchons 19a, 19b. La contreforce nécessaire pour effectuer cette opération peut être appliquée en tirant sur la partie du bracelet qui se trouve attachée du côté de fermoir 1 opposé à celui du capuchon 19a, 19b qu'on souhaite enlever. L'élément de blocage 9a, 9b ainsi exposé peut par conséquent être sorti latéralement de son logement 7a, 7b.

En retirant l'autre capuchon 19b, 19a, le bracelet 11 peut être complètement séparé de l'élément de liaison et peut ainsi être remplacé, le cas échéant, par exemple pour changer de couleur, ou pour remplacer un bracelet 11 usé.

Si les trous 25a, 25b dans les secondes extrémités partiellement fermées 23a, 23b des capuchons 19a, 19b sont suffisamment larges pour que les éléments de blocage 9a, 9b puissent passer, il est possible d'échanger les capuchons à volonté, et ainsi de faire des combinaisons particulières de couleur, de texture, etc. non seulement du bracelet 11, mais aussi des capuchons 19a, 19b.

De façon alternative, il est également envisageable que les capuchons 19a, 19b soient fixés de manière permanente au bracelet 11, en choisissant un diamètre desdits trous 25a, 25b qui est insuffisant pour permettre aux éléments de blocage 9a, 9b de passer. Ce faisant, lors de la fabrication du bracelet 11, les capuchons 19a, 19b seront enfilés sur le bracelet 11, et puis les éléments de rétention 9a, 9b seront rendus solidaires des extrémités du bracelet 11.

Ce fermoir permet également l'utilisation de bracelets 11 élastiques présentant une longueur inférieure au pourtour de la main du porteur, car il n'est pas nécessaire de faire tourner le capuchon, ce qui est difficile si le bracelet a tendance à plaquer le fermoir 1 contre la peau du porteur. Par ailleurs, le porteur peut fermer le fermoir, et puis enfiler le bracelet sur son poignet en le passant autour de la main si le bracelet 11 est extensible.

Bien que l'invention ait été décrite en liaison avec un mode de réalisation particulier, des variations sont possibles sans sortir du cadre de l'invention comme défini par les revendications annexées.

## Revendications

1. Fermoir (1) pour bracelet (11) comprenant :
- un élément de liaison (3) définissant un axe longitudinal (5), cet élément de liaison (3) comprenant un premier logement (7a) et un second logement (7b) pour recevoir chacun une extrémité dudit bracelet (11), chacun desdits logements comprenant une ouverture latérale (13a, 13b) communiquant avec une ouverture longitudinale (15a, 15b), ladite ouverture latérale (13a, 13b) étant agencée pour permettre l'insertion d'un élément de blocage (9a, 9b) solidaire d'une extrémité du bracelet (11), ladite ouverture longitudinale (15a, 15b) étant adaptée pour permettre le passage dudit bracelet (11) et pour bloquer axialement ledit élément de blocage (9a, 9b) ;
- un premier et un second capuchon (19a, 19b) destinés à être enfilés sur ledit bracelet (11),
**caractérisé en ce que** chaque capuchon (19a, 19b) est adapté pour être enfoncé selon une direction axiale autour d'au moins une partie dudit élément de liaison (3) afin de fermer au moins partiellement l'ouverture latérale correspondante et de retenir l'élément de blocage correspondant (9a, 9b) dans son logement (7a, 7b).

2. Fermoir (1) selon la revendication 1, dans lequel lesdits capuchons (9a, 9b) présentent chacun une forme creuse comportant une première face (21 a, 21 b) ouverte agencée pour recevoir ledit élément de liaison (3) et une seconde face (23a, 23b) partiellement fermée comportant une ouverture (25a, 25b) pour le passage du bracelet (11).

3. Fermoir (1) selon la revendication 2, dans lequel ladite ouverture (25a, 25b) pour le passage du bracelet (11) est conformée de telle sorte que l'élément de blocage (9a, 9b) peut passer au travers de ladite ouverture (25a, 25b).

4. Fermoir (1) selon l'une des revendications précédentes, comprenant en outre un système de rétention agencé pour retenir chaque capuchon (19a, 19b) sur ledit élément de liaison (3).

5. Fermoir (1) selon la revendication 4, dans lequel ledit système de rétention comprend au moins une bague élastique (27) située dans une rainure (29) ménagée dans ledit élément de liaison (9) ou dans une paroi intérieure de chaque capuchon (19a, 19b).

6. Fermoir (1) selon la revendication 4, dans lequel ledit système de rétention comprend au moins une bague élastique (27), de préférence deux bagues élastiques (27), associées à chaque capuchon (19a, 19b).

7. Ensemble (29) comprenant un fermoir (1) selon l'une des revendications précédentes ainsi qu'un bracelet (11) muni d'un desdits éléments de blocage (9a, 9b) à chacune de ses extrémités.

8. Ensemble (29) selon la revendication 7, dans lequel chaque élément de blocage (9a, 9b) est formé en tant que bille, cylindre, polyèdre ou cône.

9. Ensemble (29) selon la revendication 8, dans lequel chaque élément de blocage (9a, 9b) est serti, rivé, collé, soudé ou goupillé sur ledit bracelet.

10. Ensemble (29) selon l'une des revendications 8 ou 9, dans lequel au moins l'un desdits éléments de blocage (9a, 9b) est de plus grand diamètre que le diamètre maximum dudit bracelet (11).

11. Ensemble (29) selon l'une des revendications 7-10, dans lequel ledit bracelet (11) est extensible et élastique.
